Europäisches Patentamt

European Patent Office

Office européen des brevets

(11) Veröffentlichungsnummer : **0 139 181**
**B1**

(12) **EUROPÄISCHE PATENTSCHRIFT**

(45) Veröffentlichungstag der Patentschrift :
19.08.87

(21) Anmeldenummer : 84110313.8

(22) Anmeldetag : 30.08.84

(51) Int. Cl.⁴ : **G 11 B 23/04**

(54) Sicherungseinrichtung für eine Videokassette.

(30) Priorität : 27.09.83 DE 8327644 U
09.02.84 DE 8403881 U

(43) Veröffentlichungstag der Anmeldung :
02.05.85 Patentblatt 85/18

(45) Bekanntmachung des Hinweises auf die Patenterteilung : 19.08.87 Patentblatt 87/34

(84) Benannte Vertragsstaaten :
AT BE CH DE FR GB IT LI LU NL SE

(56) Entgegenhaltungen :
EP-A- 0 054 505
EP-A- 0 064 859
WO-A-83 /028 46
WO-A-84 /024 22
FR-A- 2 510 684
GB-A- 2 119 753
US-A- 3 417 938
US-A- 3 756 329
US-A- 4 131 001

(73) Patentinhaber : **D. LA PORTE SÖHNE GMBH**
**Wartburgstrasse 21**
**D-5600 Wuppertal 2 (DE)**

(72) Erfinder : **Söhngen, Rolf**
**Blaffertsberg 45 b**
**D-5600 Wuppertal 21 (DE)**
Erfinder : **Laddicke, Hans-Joachim**
**Benquestrasse 40**
**D-2800 Bremen (DE)**

(74) Vertreter : **Patentanwälte Dr. Solf & Zapf**
**Schlossbleiche 20 Postfach 13 01 13**
**D-5600 Wuppertal 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Sicherungseinrichtung für eine Videokassette des Systems VHS gegen unbefugtes Abspielen nach dem Oberbegriff des Anspruches 1.

Das VHS-System hat sich auf dem Markt durchgesetzt. Es hat einen Marktanteil von etwa 70 %.

Eine handelsübliche VHS-Kassette — im folgenden lediglich mit Kassette bezeichnet — ist z. B. aus der GB-A-2 119 753 bekannt und besteht im wesentlichen aus einem aus zwei Gehäuseschalen aufgebauten quaderförmigen Kasten aus Kunststoff mit einer Vorderwandung, einer Rückwandung, einem Boden, zwei Seitenwandungen und einem in den Seitenwandungen in Richtung der Vorderwandung verschwenkbar gelagerten Deckel. Unmittelbar unter dem Deckel verläuft das abspielbare Videoband parallel zur Deckelwandung. Der Deckel wird nach dem Einsetzen der Kassette in ein Abspiel- oder Aufzeichnungsgerät automatisch aufgeklappt, so daß die Abspieleinrichtung bzw. Aufzeichnungseinrichtung des Gerätes in Wirkkontakt mit dem Videoband treten kann. Beim Öffnen des Abspiel- oder Aufzeichnungsgerätes wird der Deckel automatisch wieder zugeklappt und mit einer in einer Seitenwandung angeordneten, in ein Loch eines Seitenstegs des Deckels eingreifenden Rastnase verriegelt, so daß das Videoband durch den Deckel geschützt ist.

Im Innenraum der Kassette lagern zwei Spulen seitlich nebeneinander, wobei die Spulenkerne Kupplungslöcher aufweisen, in die Antriebswellen des Abspiel- oder Aufzeichnungsgerätes formschlüssig eingreifen können, weil die Rückwandung der Kassette entsprechende Öffnungen aufweist.

Zwischen den Öffnungen für die Antriebswellen befindet sich in Richtung Deckel in der Rückwandung ein weiteres kleines rundes Sensorloch für eine den Betrieb des Bandes bewirkende Sensorlampe des Abspiel- oder Aufzeichnungsgerätes, von dem sich eine kurze Nut senkrecht in Richtung Deckel erstreckt, die durch eine eckige Öffnung in der Rückwandung unterbrochen wird, jedoch mit einem formmäßig entsprechenden, mit der Nut fluchtenden Schlitz in der Deckelwandung korrespondiert. Senkrecht unter dem Sensorloch setzt sich die Nut noch etwa einen Zentimeter in Richtung Boden der Kassette fort, wobei etwa in der Mitte der Längserstreckung der unteren Nut beidseitig jeweils eine bogenförmige Ausnehmung angeordnet ist, weil auf dem Boden der Nut ein in Ausnehmungen passender Schraubenkopf einer das Kassettengehäuse zusammenhaltenden Schraube versenkt ist. Neben anderen Befestigungsschrauben ist diese Schraube unbedingt zu lösen, wenn die Gehäuseschalen geöffnet werden sollen. Um dies zu verhindern und somit eine Entnahme bzw. einen Austausch des Bandes unmöglich zu machen, sind die Schrauben der bekannten Kassetten durch Klebestreifen oder Harz abgedeckt und so gegen Herausschrauben gesichert. Das Sensorloch erstreckt sich mit einer Hohlzylinderwandung bis zur Vorderwandung des Kassettengehäuses und weist in Richtung Vorderwandung, etwas unterhalb der Längsmitte, zwei sich gegenüberliegende viereckige Durchgänge zum Innenraum der Kassette hin auf, wobei die Fluchtlinie der Durchgänge sich parallel zur Deckelwandung erstreckt. Die Kassette weist noch weitere Öffnungen und Bedienelemente auf, die aber für die Erfindung nicht von Bedeutung sind und deshalb unerwähnt bleiben.

Die beschriebene Schraubensicherung der bekannten Kassette dient lediglich zur Verhinderung von unbefugtem Öffnen der beiden Gehäuseschalen, verhindert jedoch nicht ein Öffnen des Klappdeckels, dessen Verrastung durch Eindrücken eines in der Seitenwandung vorhandenen Stiftes von Hand aufgehoben werden kann, so daß der Deckel aufgeklappt und das Band beschädigt oder sogar auf diesem Wege entnommen werden kann. Zudem kann die bekannte Kassette trotz der Schraubensicherung ohne weiteres in jedes dem VHS-System entsprechende Abspiel- oder Aufzeichnungsgerät eingesetzt und unbefugt benutzt werden, wobei auch eine Löschung der Aufzeichnung erfolgen kann.

Um dem unbefugten Benutzen entgegenwirken zu können, sind abschließbare kastenförmige Behälter entwickelt worden, die eine Kassette aufnehmen und mit einem am Kasten angeordneten Schloß verriegelt werden können. Ein derartiger Schutz der Kassette ist sehr aufwendig und nimmt bei vielen räumlich gesammelten Kassetten unnötigen Raum ein.

Aus der WO-A-8 302 846 ist eine Kassetten-Attrappe bekannt, die die äußere Raumform üblicher Kassetten sowie eine Verriegelungseinrichtung aufweist, die eine Verriegelung der Attrappe in einem Abspiel- oder Aufzeichnungsgerät ermöglicht, d. h. die in das Gerät eingesetzte und verriegelte Attrappe kann nachfolgend nur mittels eines Schlüssels entriegelt und aus dem Gerät entnommen werden. Diese Kassetten-Attrappe verhindert somit zwar wirksam die unbefugte Benutzung des Gerätes, nicht jedoch die Benutzung einzelner Kassetten in einem anderen, ungesicherten Gerät.

Aufgabe der Erfindung ist, eine Sicherungseinrichtung für einzelne Kassetten zur schaffen, die einfach aufgebaut ist und nahezu keinen zusätzlichen Raum erfordert.

Diese Aufgabe wird durch die Merkmale des Hauptanspruchs gelöst. Vorteilhafte Ausbildungen der Erfindung werden in den Unteransprüchen gekennzeichnet. Anhand der in der Zeichnung abgebildeten Beispiele wird die Erfindung im folgenden näher erläutert. Es zeigen :

Figur 1   eine Draufsicht auf die Rückseite der Kassette,

Figur 2   einen Schnitt durch die Kassette entlang der Linie II-II in Fig. 1 ohne Sicherungseinrichtung,

Figur 3 eine Draufsicht auf den Deckel der Kassette mit einem Teilschnitt im Bereich des Sensorlochs mit drei Abbildungen verschiedener Sicherungseinrichtungen,

Figur 4 eine Draufsicht auf einen Teil der Rückseite der Kassette mit einer weiteren Ausbildung der Sicherungseinrichtung,

Figur 5 einen Schnitt durch die Kassette entlang der Linie V-V in Fig. 4.

Eine Videokassette 1 des VHS-Systems besteht aus zwei mittels Schrauben 2, 2a zusammengehaltenen rechteckigen Gehäuseschalen 3 und 4, die ein quaderförmiges Gehäuse bilden, das eine Vorderwandung 5, eine Rückwandung 6, zwei Seitenwandungen 7 sowie einen Boden 8 und einen um in den Seitenwandungen 7 liegenden Anlenkachsen 10 in Richtung der Vorderwandung schwenkbar angeordneten Deckel 9 aufweist. In der Rückwandung 6 befinden sich etwa in der Quermitte zwei seitlich nebeneinander angeordnete Öffnungen 11 symmetrisch neben der Quermittenebene 12. In der Quermittenebene 12 befindet sich außerdem in der Rückwandung im Bereich zwischen Deckel 9 und den Öffnungen 11 ein Sensorloch 13 mit einer Hohlzylinderwandung 14. Etwa in der Längsmitte des Sensorlochs 13 sind in die Hohlzylinderwandung 14 sich fluchtend gegenüberliegende, in den Innenraum der Kassette mündende Durchgänge 15 eingebracht. In Richtung der Querschnittsebene 12 erstreckt sich eine Nut 16 vom Sensorloch 13 nach unten und eine Nut 17 nach oben, die durch ein eckiges Loch 18 unterbrochen wird und sich im Deckel 9 mit einer Ausnehmung 19 fluchtend fortsetzt. Die Nut 16 erweitert sich etwa in ihrer Längsmitte beidseitig bogenförmig, wobei auf dem Boden der Nut ein durch die Erweiterung passender Schraubenkopf 20 der Befestigungsschraube 2a versenkt angeordnet ist.

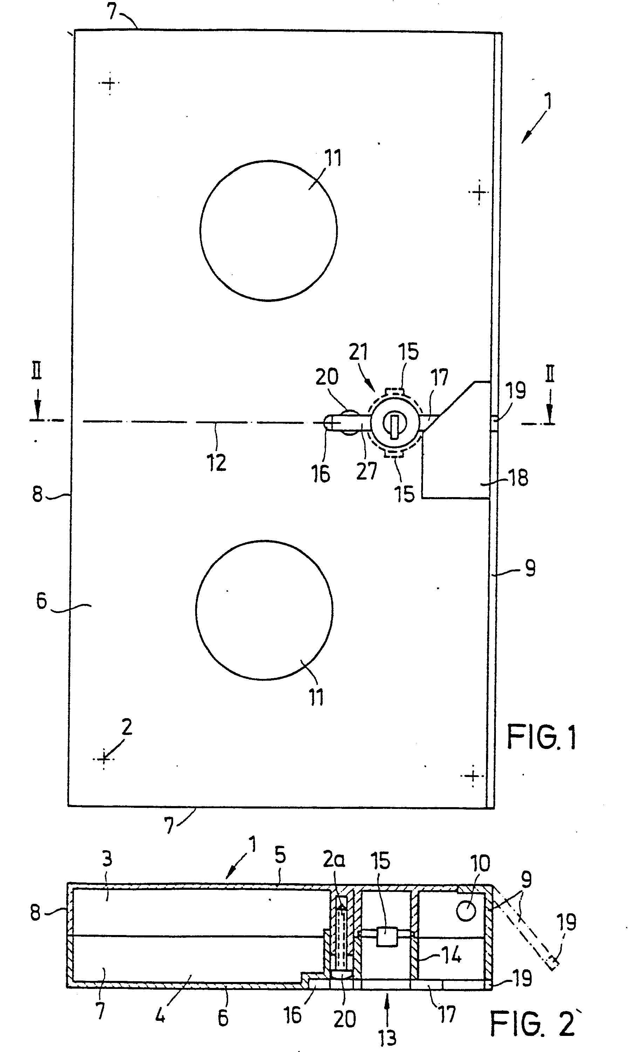

Nach einer ersten Ausführungsform der Erfindung (Fig. 1 bis 3) besteht die Sicherungseinrichtung für die Kassette 1 aus einem Zylinderschloß 21, das einen Schloßzylinder 22 und vorzugsweise einen Flanschrand 23 im Schlüssellochbereich aufweist. Der Zylinder 22 steckt formschlüssig im Loch 13, wobei der Flanschrand 23 auf der Lochwandung aufliegen kann. Die Länge des Zylinders 22 ist so gewählt, daß lediglich der Rand 23 die Rückwandung 6 überragt. Vorzugsweise wird ein Zylinderschloß verwendet, das im Loch 13 voll versenkbar ist.

Das Zylinderschloß ist im Prinzip wie an sich bekannte Zylinderschlösser aufgebaut. Für die Erfindung hat das Zylinderschloß jedoch mindestens einen mit einem in das Schloß von oben einsteckbaren Schlüssel 24 in an sich bekannter Weise betätigbaren, aus der Zylinderwandung herausfahrbaren Riegel 25, der in Höhe der Durchgänge 15 sitzt und in einen der Durchgänge 15 eingreift, so daß das Schloß nicht ohne Schlüsselbedienung, d. h. Zurückziehen des Riegels 25 aus dem Loch 13 herausgenommen werden kann. Der Riegel 25 kann ein federbelasteter, stets über die Wandung des Zylinders 22 überstehender Riegel mit einer Anlaufschräge 26 sein. Wird das Schloß eingesetzt, wozu der Schlüssel nicht erforderlich ist, wird der Riegel gegen die Federkraft zurückgedrängt, weil die Schräge 26 auf der Oberkante des Sensorlochs 13 abgleitet, und schnappt selbsttätig in einen Durchgang 15 ein, wenn das Schloß entsprechend tief in das Sensorloch 13 eingesetzt ist. Mit dem Schlüssel 24 kann der Riegel 25 zurückgezogen und das Schloß danach wieder entnommen werden.

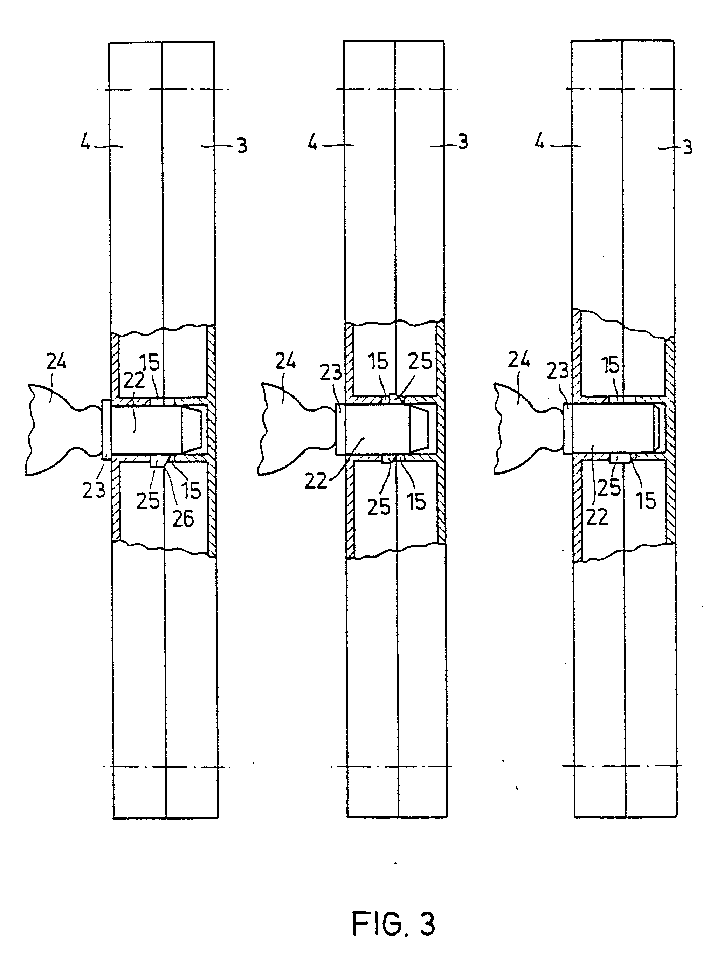

Anstelle nur eines schnappenden Riegels können auch zwei sich gegenüberliegend angeordnete Riegel 25 vorgesehen sein, was in Fig. 3 in der mittleren Abbildung dargestellt ist.

Des weiteren können anstelle eines oder anstelle von zwei schnappenden Riegeln ein oder zwei mit einem Schlüssel 24 in Richtung der Durchgänge 15 lediglich verschiebbare Riegel 25 vorgesehen sein, bei denen eine Gleitschräge fehlen kann (Fig. 3 rechte Abbildung). Die Riegel 25 werden mit dem Schlüssel 24 wieder zurückgezogen, wenn das Schloß dem Sensorloch 13 entnommen werden soll.

Nach einer weiteren Ausführungsform der Erfindung befindet sich auf der Außenwandung des Schloßzylinders 22 im Bereich des Flanschrandes 23 ein sich senkrecht zur Längserstreckung des Zylinders erstreckender Stift 27, dessen Form der Form der Nut 16 angepaßt ist und der etwa formschlüssig in die Nut 16 eingreift und dort sitzt, wenn das Schloß 21 eingesteckt ist. Der Stift ist zumindest so lang, daß er den Schraubenkopf 20 der Befestigungsschraube 2a überdeckt. Auf diese Weise wird nach der Erfindung verhindert, daß die Kassette geöffnet werden kann. Selbst wenn alle anderen Schrauben 2 gelöst werden, hält die Schraube 2a die Kassette noch zusammen.

Eine weitergehende Ausführungsform der Erfindung sieht vor, daß dem Stift 27 gegenüberliegend auf der Außenwandung des Zylinders 22 ein sich in entgegengesetzter Richtung erstreckender Stift angeordnet ist, der formschlüssig in der Nut 17 und der Ausnehmung 19 sitzt und unmittelbar nach der Ausnehmung 19 rechtwinklig abgewinkelt ist und den Deckel 9 übergreift, so daß der Deckel 9 nicht ohne weiteres geöffnet werden kann. Diese Ausführungsform der Erfindung ist — weil ohne weiteres verständlich — nicht dargestellt.

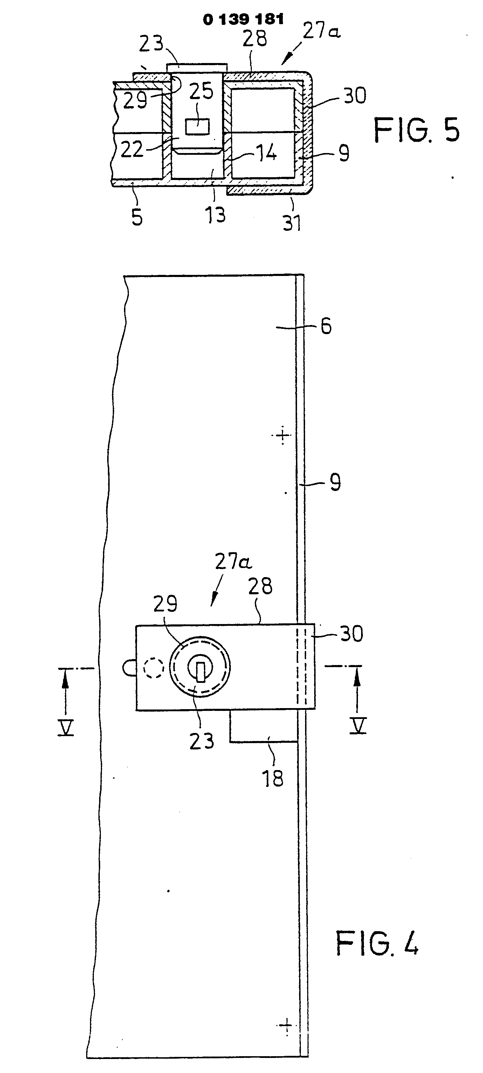

Eine besonders effektive Sicherungseinrichtung ist in den Fig. 4 und 5 abgebildet. Für die Abdeckung der Schraube 2a und das Übergreifen des Deckels 9 wird ein Winkelblech 27a verwendet mit einem an der Rückwandung 6 anliegenden Schenkel 28, der vom Deckel 9 bis zur Überdeckung des Schraubenkopfs 20 reicht und ein Loch 29 aufweist, das mit dem Sensorloch 13 fluchtet und vom Schloßzylinder 22 formschlüssig durchgriffen wird, wobei der Flanschrand 23 des Zylinderschlosses 21 auf der Außenseite des Schenkels 28 aufsitzt (Fig. 5).

Das Winkelblech 27a weist zudem einen vom Schenkel 28 rechtwinklig abgehenden, den Deckel 9 in seiner gesamten Breite übergreifenden, auf dem Deckel 9 aufliegenden Quersteg 30 auf, der vorzugsweise in einen rechtwinklig nach unten in Richtung zum Boden 8 hin abgewinkelten Lagersteg 31 übergeht, der an der Vorderwandung 5 anliegt. Mit dieser Kombination aus Winkelblech 27a und Schloß 21 wird die Kassette 1 vollkommen gegen unbefugtes Benutzen und Öffnen gesichert, wenn der Schlüssel 24 nicht zur Verfügung steht.

Die erfindungsgemäße Sicherungseinrichtung verhindert allein schon mit dem Schloß 21, daß eine Kassette in ein Abspiel- oder Aufzeichnungsgerät ordnungsgemäß eingesetzt werden kann. Das Verschließen des Geräts ist nicht möglich, weil der Sensorstift nicht in das Sensorloch 13 eingefahren werden kann. Die gesicherte Kassette kann auch nicht auseinandergenommen werden, wenn die Schraube 2a überdeckt ist. Zudem kann auch der Deckel nicht geöffnet werden, wenn er von einem abgewinkelten am Schloßzylinder sitzenden Stift oder von einem Winkelblech 27a formschlüssig übergriffen wird. Somit ist mit einfachen Mitteln eine Sicherungseinrichtung geschaffen worden, die vorhandene Raumformen der Kassette benutzt (Auswahl des Sensorlochs 13 und gegebenenfalls der Nuten 16, 17 sowie der Ausnehmung 19), so daß an der Kassette keine zusätzlichen Elemente für die Sicherung erforderlich sind.

**Patentansprüche**

1. Sicherungseinrichtung für eine Videokassette des VHS-Systems, die aus zwei mittels Schrauben (2, 2a) zusammengehaltenen rechteckigen Gehäuseschalen (3 und 4) besteht, die ein quaderförmiges Gehäuse bilden, das eine Vorderwandung (5), eine Rückwandung (6), zwei Seitenwandungen (7) sowie einen Boden (8) und einen um in den Seitenwandungen (7) liegende Anlenkachsen (10) in Richtung der Vorderwandung schwenkbar angeordneten Deckel (9) aufweist, wobei in der Rückwandung (6) unterhalb des Deckels (9) in der Quermittenebene (12) ein Sensorloch (13) mit einer Hohlzylinderwandung (14) angeordnet ist, die bis zur Vorderwandung (5) reicht und in deren Längsmitte sich fluchtend gegenüberliegende, in den Innenraum der Kassette mündende Durchgänge (15) eingebracht sind, und wobei sich in Richtung der Querschnittsebene (12) eine Nut (16) zum Sensorloch (13) nach unten und eine Nut (17) nach oben erstrecken und die Nut (17) durch ein eckiges Loch (18) unterbrochen wird und sich im Deckel (9) mit einer Ausnehmung (19) fluchtend fortsetzt und wobei die Nut (16) sich etwa in ihrer Längsmitte beidseitig bogenförmig erweitert, wobei auf dem Boden der Nut ein durch die Erweiterung passender Schraubenkopf (20) der Befestigungsschraube (2a) versenkt angeordnet ist, dadurch gekennzeichnet, daß im Sensorloch (13) formschlüssig der Zylinder (22) eines Zylinderschlosses (21) steckt, das mindestens einen, mit einem in das Schloß von oben einsteckbaren Schlüssel (24) in an sich bekannter Weise betätigbaren, aus der Zylinderwandung (22) herausfahrbaren Riegel (25) aufweist, der in Höhe der Durchgänge (15) sitzt und in einen der Durchgänge (15) eingreift.

2. Sicherungseinrichtung nach Anspruch 1, dadurch gekennzeichnet, daß das Zylinderschloß (21) einen Flanschrand (23) im Schlüssellochbereich aufweist und der Flanschrand (23) auf dem Lochrand des Sensorlochs (13) aufliegt.

3. Sicherungseinrichtung nach Anspruch 2, dadurch gekennzeichnet, daß lediglich der Flanschrand (23) die Rückwandung (6) überragt.

4. Sicherungseinrichtung nach Anspruch 1, dadurch gekennzeichnet, daß das Zylinderschloß (21) im Sensorloch (13) voll versenkbar ausgebildet ist.

5. Sicherungseinrichtung nach einem oder mehreren der Ansprüche 1 bis 4, dadurch gekennzeichnet, daß der Riegel (25) ein federbelasteter stets über die Wandung des Schloßzylinders (22) überstehender Riegel mit einer Anlaufschräge (26) ist.

6. Sicherungseinrichtung nach einem oder mehreren der Ansprüche 1 bis 4, dadurch gekennzeichnet, daß der Riegel (25) ein in Richtung der Durchgänge (15) verschiebbarer Riegel ist.

7. Sicherungseinrichtung nach einem oder mehreren der Ansprüche 1 bis 6, dadurch gekennzeichnet, daß sich auf der Außenwandung des Schloßzylinders (22) im Bereich des Flanschrandes (23) ein sich senkrecht zur Längserstreckung des Zylinders erstreckender Stift (27) befindet, dessen Form der Nut (16) angepaßt ist und der etwa formschlüssig in die Nut (16) eingreift und zumindest so lang ist, daß er den Schraubenkopf (20) der Befestigungsschraube (2a) überdeckt.

8. Sicherungseinrichtung nach einem oder mehreren der Ansprüche 1 bis 7, dadurch gekennzeichnet, daß dem Stift (27) gegenüberliegend auf der Außenwandung des Zylinders (22) ein sich in entgegengesetzter Richtung erstreckender Stift angeordnet ist, der formschlüssig in die Nut (17) und die Ausnehmung (19) eingreift und unmittelbar nach der Ausnehmung (19) rechtwinklig abgebogen ist und den Deckel (9) übergreift.

9. Sicherungseinrichtung nach einem oder mehreren der Ansprüche 1 bis 6, dadurch gekennzeichnet, daß für die Abdeckung der Schraube (2a) und das Übergreifen des Deckels (9) ein Winkelblech (27a) verwendet wird mit einem an der Rückwandung (6) anliegenden Schenkel (28), der vom Deckel (9) bis zur Überdeckung des Schraubenkopfs (20) reicht und ein Loch (29) aufweist, das mit dem Sensorloch (13) fluchtet und vom Schloßzylinder (22) formschlüssig durchgriffen wird, wobei der Flanschrand (23) des Zylinderschlosses (21) auf der Außenseite des Schenkels (28) aufsitzt.

10. Sicherungseinrichtung nach Anspruch 9, dadurch gekennzeichnet, daß das Winkelblech (27a) zudem einen vom Schenkel (28) rechtwinklig abgehenden, den Deckel (9) in seiner gesamten Breite übergreifenden, auf dem Deckel (9) aufliegenden Quersteg (30) aufweist.

11. Sicherungseinrichtung nach Anspruch 10, dadurch gekennzeichnet, daß der Quersteg (30) in einen rechtwinklig nach unten in Richtung zum Boden (8) hin abgewinkelten Lagersteg (31) übergeht, der an der Vorderwandung (5) anliegt.

**Claims**

1. Security system for a video cassette of the VHS type, which consists of two rectangular housing casings (3 and 4) held together by two screws (2, 2a) to form a rectangular shaped housing which has a top wall (5), a rearwall (6), two side walls (7) and a floor (8) and a lid (9) attached pivotally in the direction of the top wall about pivots (10) being arranged in the side walls (7), whereby in the rear wall (6) underneath the lid (9) in the region of the central plane of cross section (12) a sensor hole (13) having a hollow cylindrical wall (14) is arranged, which extends to the top wall (5) and in the longitudinal center of which opposite passages (15) are arranged in alignment with each other, which open out into the inside of the cassette and where in the direction of the central plane (12) there extends a groove (16) to the sensor hole (13) from below and a groove (17) from above and the groove (17) passes through a square hole (18) and reaches to the lid (9) with an aligning cut out (19) and whereby the groove (16) substantially in its longitudinal center on both sides has an arcuate enlargement, and on the floor of the groove a screw head (20) of the screw (2a) is arranged fitting sunkly in the enlargement, characterised in that a cylinder (22) of a cylinder lock (21) is inserted formlockingly into the sensor hole (13), the cylinder lock (21) being provided with at least one key-bolt (25), being operatable in a known manner by means of a key (24) insertable into the lock (21) from above and being to bring out of the cylinder wall (22), said key-bolt (25) being arranged in the height of the passages (15) and engages into one of the passages (15).

2. Security system according to Claim 1, characterised in that the cylinder lock (21) is provided with a flange edge (23) in the region of the keyhole and the flange edge (23) lies over the hole wall of the sensor hole (13).

3. Security system according to Claim 2, characterised in that only the flange edge (23) extends beyond the rear wall (6).

4. Security system according to Claim 1, characterised in that the cylinder lock (21) is received wholly in the sensor hole (13).

5. Security system according to one or more of Claims 1 to 4, characterised in that the key-bolt (25) is a spring loaded bolt, always extending over the wall of the lock cylinder (22) with an entry slope (26).

6. Security system according to one or more of Claims 1 to 4, characterised in that the key-bolt (25) is a bolt sliding in the direction of the passages (15).

7. Security system according to one or more of Claims 1 to 6, characterised in that a pin (27) is provided on the outside wall of the lock cylinder (22) in the region of the flange edge (23), said pin (27) extends at right angles to the length of the cylinder, the shape of said pin (27) corresponds to the shape of the groove (16) and said pin (27) engages in somewhat locking shape in the groove (16) and is at least so long that it extends beyond the screwhead (20) of the security screw (2a).

8. Security system according to one or more of Claims 1 to 7, characterised in that opposite the pin (27) on the outside wall of the cylinder (22) a pin is arranged, which engages formlockingly into the groove (17) and into the cut out (19) and is shaped at right angles behind the cut out (19), and engages over the lid (9).

9. Security system according to one or more of Claims 1 to 6, characterised in that for covering the screw (2a) and the engaging over the lid (9) an angled plate (27a) is used with a shank (28) overlying the back wall (6), said shank (28) reaches from the lid (9) up to the overcovering of the screwhead (20) and has a hole (29) which passes over the sensor hole (13) and which engages the lock cylinder (22) in locking manner whereby the flange edge (23) of the cylinder lock (21) sits on the outside of the shank (28).

10. Security system according to Claim 9, characterised in that the angled plate (27a) is further provided with a cross web (30) extending from the shank (28) at right angles and engaging over the lid (9) in its entire width and lying on the lid (9).

11. Security system according to Claim 10, characterised in that the cross web (30) in a right angled direction from below to the floor (8) has an angled support web (31) which lies over the top wall (5).

**Revendications**

1. Dispositif de sécurité pour une cassette vidéo du système VHS, qui est constituée de deux coquilles de boîtier rectangulaires (3, 4) maintenues ensemble au moyen de vis (2, 2a), qui forment un boîtier parallélépipédique, présentant une paroi avant (5), une paroi arrière (6), deux parois latérales (7), ainsi qu'un fond (8) et un couvercle (9) disposé de façon à pouvoir basculer en direction de la paroi avant autour d'un axe d'articulation (10) placé dans les parois latérales (7), un trou (13) de capteur ayant une paroi cylindrique creuse (14) étant disposé dans la paroi arrière (6) en dessous du couvercle (9) dans le plan médian transversal, la paroi cylindrique s'étendant jusqu'à la paroi avant (5) et des passages (15) débouchant à l'intérieur de la cassette étant disposés à mi-longueur de la paroi cylindrique et étant alignés en regard l'un de l'autre, et des rainures s'étendant en direction du plan de section transversal (12), l'une (16) vers le trou (13) vers le bas, et l'autre (17), vers le haut du capteur, et la rainure (17) étant interrompue par un trou polygonal (18), et se prolongeant dans le couvercle (9) par un creux (19) dans l'alignement, et la rainure (16) s'élargissant des deux côtés en forme d'arc, sensiblement au milieu de sa longueur, une tête adaptée (20) d'une vis de fixation (2a) étant enfoncée dans le fond de la rainure par l'élargissement, caractérisé en ce que le cylindre (22) d'une serrure à cylindre (21) est logé avec blocage positif dans le trou de capteur (13), laquelle présente au moins un verrou (25) pouvant sortir hors de la paroi cylindrique (22) actionnable de façon en soi connue par une clef (24) pouvant être introduite par en haut dans la serrure, le verrou se plaçant dans la hauteur des passages (15) et s'engageant dans un des passages (15).

2. Dispositif de sécurité selon la revendication 1, caractérisé en ce que la serrure à cylindre (21) présente un bord de bride (23) dans la zone du trou de clef, et le bord de bride (23) s'applique sur le bord du trou de capteur (13).

3. Dispositif de sécurité selon la revendication 2, caractérisé en ce qu'uniquement le bord de bride dépasse en hauteur la paroi arrière (6).

4. Dispositif de sécurité selon la revendication 1, caractérisé en ce que la serrure à cylindre (21) est conformée de façon à pouvoir être enfoncée complètement dans le trou de capteur (13).

5. Dispositif de sécurité selon une des revendications 1 à 4, caractérisé en ce que le verrou (25) est un verrou chargé par ressort faisant saillie en permanence de la paroi du cylindre de serrure (22), avec un biseau d'attaque (26).

6. Dispositif de sécurité selon une ou plusieurs des revendications 1 à 4, caractérisé en ce que le verrou (25) est un verrou déplaçable en direction des passages (15).

7. Dispositif de sécurité selon une ou plusieurs des revendications 1 à 6, caractérisé en ce qu'une cheville (27) s'étendant perpendiculairement à l'axe longitudinal du cylindre est disposée sur la paroi extérieure du cylindre de serrure (22), au voisinage du bord de bride (23), la cheville étant adaptée à la forme de la rainure (15), et s'engageant avec blocage positif dans la rainure (16), et étant au moins assez longue pour recouvrir la tête (20) de la vis de fixation (2a).

8. Dispositif de sécurité selon une ou plusieurs des revendications 1 à 7, caractérisé en ce qu'une cheville est disposée en regard de la cheville (27), sur la paroi extérieure du cylindre (22) et s'étendant en direction opposée, cette cheville étant engagée avec blocage positif dans la rainure (17) et dans le creux (19), et est repliée à angle droit directement après le creux (19) et dépasse le couvercle (9).

9. Dispositif de sécurité selon une ou plusieurs des revendications 1 à 6, caractérisé en ce que pour le recouvrement de la vis (2a) et le dépassement du couvercle (9), on utilise une feuille de métal pliée (27a), avec une branche appliquée contre la paroi arrière (6), laquelle branche s'étend jusqu'au recouvrement de la tête de vis (20), et présente un trou (29) qui est de niveau avec le trou de capteur (13) et est pénétrée de façon positive par le cylindre de serrure (22), le bord de bride (23) de la serrure à cylindre (21) étant appliqué sur le côté extérieur de la branche (28).

10. Dispositif de sécurité selon la revendication 9, caractérisé en ce que la feuille métallique pliée (27a) présente en outre une entretoise transversale (30) appliquée contre le couvercle (9), pliée à angle droit par rapport à la branche (28) et recouvrant le couvercle (9) sur la totalité de sa largeur.

11. Dispositif de sécurité selon la revendication 10, caractérisé en ce que l'entretoise transversale (30) se prolonge par une entretoise d'appui (31) pliée à angle droit vers le bas en direction du fond (8) et est appliquée contre la paroi avant (5).

FIG.1

FIG. 2

FIG. 3

**0 139 181**

FIG. 5

FIG. 4